Europäisches Patentamt

European Patent Office

Office européen des brevets

(11) Veröffentlichungsnummer: **0 310 564**
**A1**

## (12) EUROPÄISCHE PATENTANMELDUNG

(21) Anmeldenummer: 88810671.3

(22) Anmeldetag: 29.09.88

(51) Int. Cl.⁴: **G 01 F 23/28**
**G 10 K 11/00**

(30) Priorität: 02.10.87 CH 3863/87

(43) Veröffentlichungstag der Anmeldung:
05.04.89 Patentblatt 89/14

(84) Benannte Vertragsstaaten:
AT BE CH DE ES FR GB GR IT LI LU NL SE

(71) Anmelder: **AMBERG MESSTECHNIK AG**
**Rheinstrasse 4**
**CH-7320 Sargans (CH)**

(72) Erfinder: **Amberg, Rudolf**
**Sixer 6**
**CH-7320 Sargans (CH)**

(74) Vertreter: **Schick, Carl et al**
**PATENTANWALTS-BUREAU ISLER AG Walchestrasse 23**
**CH-8006 Zürich (CH)**

(54) **Füllmengenmesser.**

(57) Füllmengenmesser mit einem um eine erste Achse (6) drehbar gelagerten Halter (3), an den ein um eine zweite Achse (7) drehbar gelagerter Distanzmesser (5) montiert ist, mit einem Motor (34) für den Antrieb des Halters (3), mit einem Motorantrieb (135) für den Distanzmesser (5), mit einem Drehgeber (35), dessen Achse (8) über einen Antrieb mit der Achse (9) des den Halter (3) bewegenden Motors (34) verbunden ist, und mit einem Rechner (C), der mit einem Programm zur Auswertung der vom Distanzmesser (5) und vom Drehgeber (35) gelieferten Signale in Abhängigkeit der vom Rechner selbst zur Steuerung des Motorantriebs (135) erzeugten Signale versehen ist.

Fig. 1

EP 0 310 564 A1

## Beschreibung

### Füllmengenmesser

Die vorliegende Erfindung betrifft einen Füllmengenmesser.

Der vorliegenden Erfindung liegt die Aufgabe zugrunde, einen Füllmengenmesser zu schaffen, der eine relativ genaue Messung des Volumens eines in einem Behälter aufbewahrten Gutes gestattet.

Die Lösung dieser Aufgabe erfolgt erfindungsgemäss mit Hilfe eines Füllmengenmessers nach Anspruch 1. Vorteilhafte Ausgestaltungen der Erfindung sind in weiteren Ansprüchen angegeben.

Im folgenden wird ein Ausführungsbeispiel der Erfindung anhand von Zeichnungen näher beschrieben. Es zeigt:

Fig. 1 eine schematische Schnittdarstellung eines Abtastgeräts zu einem Füllmengenmesser nach der Erfindung;

Fig. 2 eine schematische Seitendarstellung einer Kupplung zu einem derartigen Abtastgerät, und

Fig. 3 eine schematische Darstellung zur Erläuterung der Arbeitsweise eines solchen Füllmengenmessers.

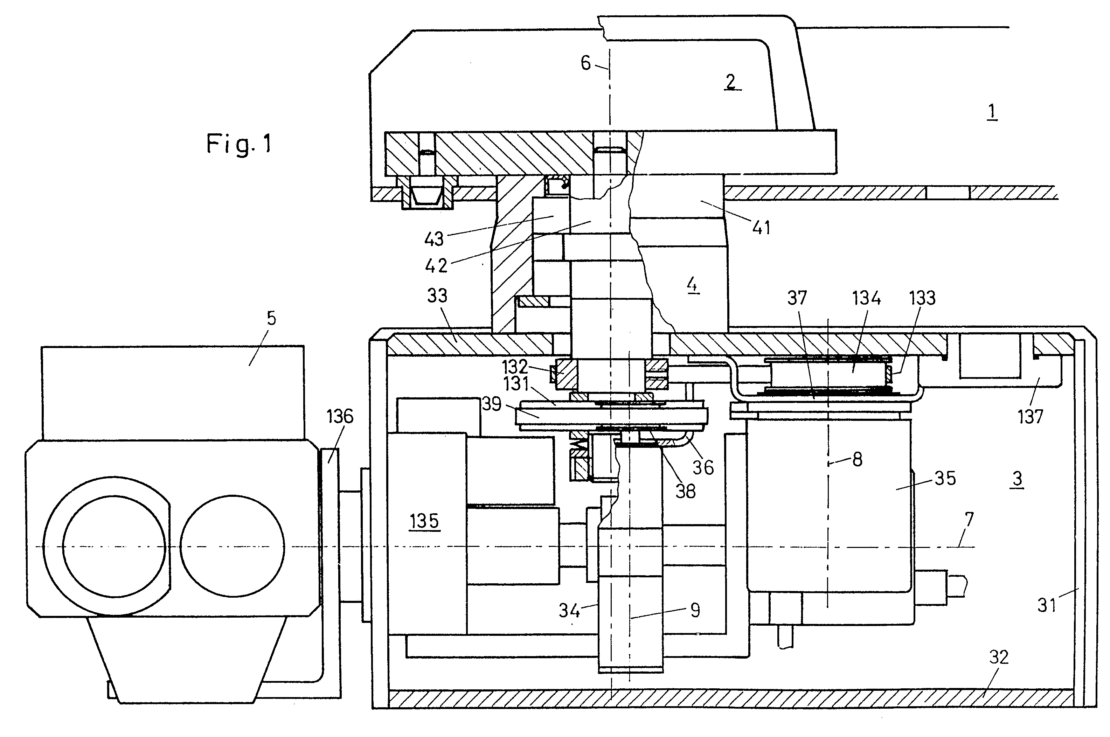

Das in Fig. 1 dargestellte Abtastgerät weist eine Geräteplattform 1, ein Befestigungselement 2, ein Abtastaggregat 3, eine Lagerung 4 und einen Distanzmesser 5 auf. Das Befestigungselement 2 ist an die Geräteplattform 1 montiert, die an einer Silowand oder Silodecke anschraubbar ist. Das Abtastaggregat 3 ist mit Hilfe der Lagerung 4 drehbar an das Befestigungselement 2 montiert, das ein Lagergehäuse 41, eine Antriebswelle 42 und ein Spindellager 43 umfasst, so dass das Abtastaggregat um die Achse 6 der Antriebswelle 42 rotieren kann. Das Abtastaggregat 3 weist ein Gehäuse 31 mit einer Bodenplatte 32 und einer Deckplatte 33 auf. Im Innern des Gehäuses 31 befinden sich ein Mikromotor 34 mit Getriebe und ein Drehgeber 35, die über einen Motorhalter 36 bzw. einen Geberhalter 37 an die Deckplatte 33 des Gehäuses 31 montiert sind. Der Mikromotor 34 hat nicht nur die Aufgabe, eine Drehbewegung des Gehäuses 31 um die Achse 6 zu bewirken, sondern auch eine Zahnriemenscheibe 38 anzutreiben, die über einen Zahnriemen 39, zwei weitere koaxiale Zahnriemenscheiben 131 und 132, einen weiteren Zahnriemen 133 und eine vierte Zahnriemenscheibe 134 den Drehgeber 35 antreibt.

Im Gehäuse 31, das auch ein einfacher Halter sein kann, ist ein Motorantrieb 135 für einen Geräteträger 136 derart angeordnet, dass eine Drehbewegung des Geräteträgers 136 um die Achse 7 möglich ist. Um die Zeichnung zu vereinfachen, sind in Fig. 1 keine weiteren Details über die entsprechende Achse 7 angegeben.

Am Geräteträger 136 ist der Distanzmesser 5 angeordnet.

Im Gehäuse 31 sind weitere elektronische, in der Figur nicht dargestellte Zubehörgeräte untergebracht, die zur Speisung der Motoren und zur Verarbeitung der vom Motorantrieb 135 und vom Drehgeber 35 gelieferten Messignale dienen. Das Gehäuse 31 ist zudem mit einer Dosenlibelle 137 ausgerüstet, um den Füllmengenmesser an der Wand oder an der Decke eines Behälters oder Silos derart fixieren zu können, dass die Achse 6 der Welle 42 mit der Vertikalen übereinstimmt.

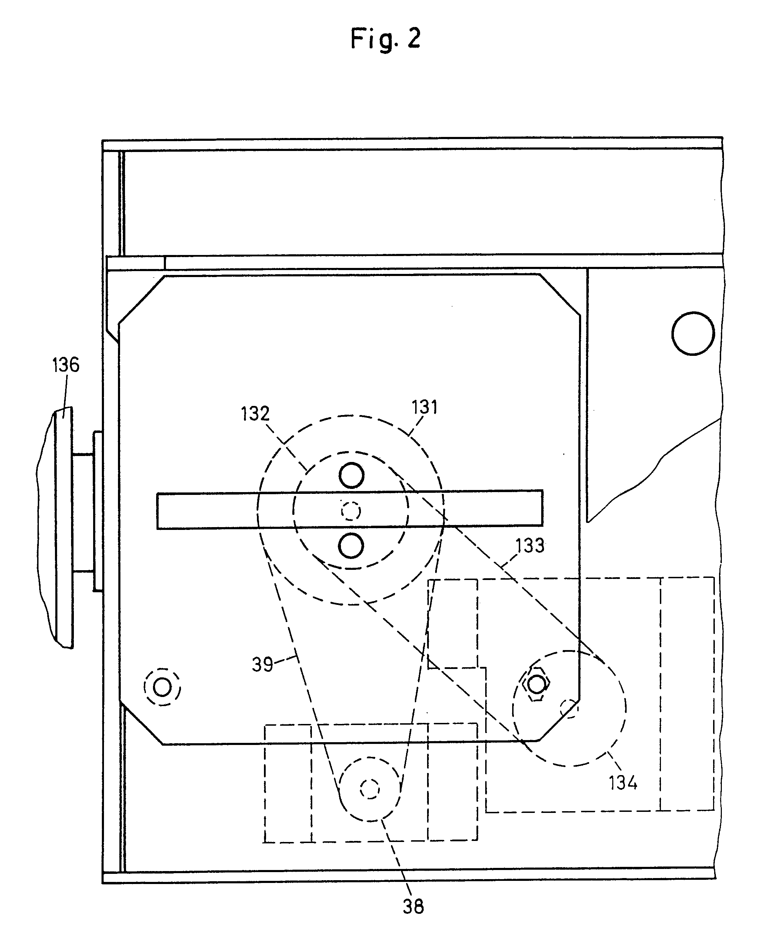

In Fig. 2 ist ein auf dem Träger 136 untergebrachter handelsüblicher Distanzmesser 5 dargestellt.

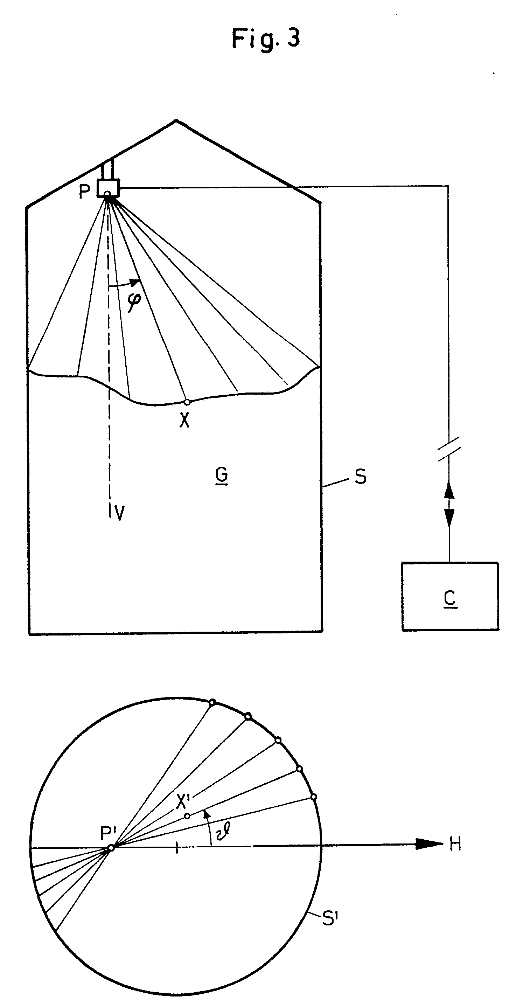

In Fig. 3 ist ein Detail der Kupplung angegeben, um die Zahnriemenscheiben 38, 131, 132 und 134 und die Zahnriemen 39 und 133 zu veranschaulichen.

An der Decke des in Fig. 4 dargestellten Silos S ist ein Füllmengenmesser derart hängend angeordnet, dass die Achse 6 des Gerätes mit der Vertikalen V und die Achse 7 (Fig. 1) mit einer Horizontalen H übereinstimmt. Der Füllmengenmesser ist zudem an einen Rechner C angeschlossen, der die optische bzw. die Distanzmessachse des Distanzmessers 5 steuert, um eine Abtastung des Raumes bis zur Grenzfläche des Gutes G abzutasten.

Durch Messung der Distanz $\delta = PX$ zwischen dem Punkt P im Distanzmesser und einem beliebigen Punkt X an der Grenzfläche des Gutes G in Funktion der Winkel $\vartheta$ und $\varphi$, worin $\vartheta$ = Winkel HP'X' und $\varphi$ = Winkel VPX ist, kann diese Grenzfläche, und bei Kenntnis der Geometrie des Silos auch das Volumen des Gutes G bestimmt werden, wobei die Abtastung mit Hilfe von gleichmässigen Winkelschritten $\Delta\vartheta$ bzw. $\Delta\varphi$ oder durch Abtastung einer idealen Horizontalebene in vorbestimmten, vom Computer berechneten Differenzschritten erfolgen kann, indem der Computer die Steuerung des Motors für den Antrieb des Halters 3 bzw. des Motorantriebs für den Distanzmesser übernimmt.

Die Abtastung kann sich zweckmässigerweise auf die Vertikale V und auf die Horizontale H als Referenzlinien beziehen, indem der Winkel $\vartheta$ jeweils solange unverändert bleibt, bis für den Winkel $\varphi$ alle Werte zwischen den zwei Grenzlagen an den Wänden abgetastet wurden, um erst danach den Wert $\vartheta + \Delta\vartheta$ zu erhalten, wobei der Computer über ein Kriterium verfügen muss, um die Grenzlagen zu erkennen oder das Volumen bis zu einer vorbestimmten Höhe zu berechnen. Selbstverständlich sind auch andere Abtastverfahren möglich.

Für eine Volumenberechnung wird es manchmal notwendig sein, eine Leervolumenmessung durchzuführen, wobei sich das Gutvolumen als Differenz zwischen dem Volumen des leeren Silos bis zu einer vorbestimmten Silohöhe und dem Füllmengen-Restvolumen des Silos bis zur selben Silohöhe ergibt, die dem benötigten Messbereich entspricht.

Um beispielsweise die Füllmenge eines Silos zu messen, kann zweckmässigerweise eine Geräteplattform fest an den Rand oder an die Decke des Silos installiert und genau über die in der Plattform befindliche Dosen-Libelle ausgerichtet sein. Diese einmal fest installierte Plattform garantiert, dass der Füllmengenmesser immer die gleiche Lage bzw. die Messkoordinaten immer denselben Ursprung haben. Die genaue Verbindung des Füllmengenmessers mit der Geräteplattform kann beispielsweise über drei Passbolzen und drei Schnellspannschrauben sichergestellt werden.

Der angegebene Füllmengenmesser ist nicht nur geeignet, um das Volumen eines Speichergutes, wie Korn oder Kies, zu messen, sondern auch Flüssigkeiten zu überwachen.

**Patentansprüche**

1. Füllmengenmesser mit einem um eine erste Achse (6) drehbar gelagerten Halter (3), an den ein um eine zweite Achse (7) drehbar gelagerter Distanzmesser (5) montiert ist, mit einem Motor (34) für den Antrieb des Halters (3), mit einem Motorantrieb (135) für die Drehung des Distanzmessers (5), und mit einem Rechner (C), der mit einem Programm zur Auswertung der vom Distanzmesser (5) gelieferten Signale in Abhängigkeit der Steuersignale für den Motor und den Motorantrieb arbeiten kann, die die Winkelkoordinaten (φ,ϑ) der jeweiligen Distanzmessrichtung bestimmen.

2. Füllmengenmesser nach Anspruch 1, dadurch gekennzeichnet, dass der Halter (3) einen Drehgeber (35) aufweist, dessen Achse (8) über eine Kupplung mit der Achse (9) des den Halter (3) bewegenden Motors (34) verbunden ist, und dass der Rechner (C) mit einem Programm zur Auswertung der vom Distanzmesser (5) gelieferten Signale in Abhängigkeit der vom Rechner (C) selbst zur Steuerung der vom Motorantrieb (135) erzeugten Signale und der vom Drehgeber (35) gelieferten Signale arbeiten kann.

3. Füllmengenmesser nach Anspruch 1 oder 2, dadurch gekennzeichnet, dass die erste Achse (6) und die zweite Achse (7) senkrecht zueinander angeordnet sind.

4. Füllmengenmesser nach Anspruch 2 oder 3, dadurch gekennzeichnet, dass die erste Achse (6) und die Achsen (8 bzw. 9) des Drehgebers (35) und des Motors (34) parallel zueinander angeordnet sind.

5. Füllmengenmesser nach einem der Ansprüche 2 bis 4, dadurch gekennzeichnet, dass die Kupplung aus vier Zahnriemenscheiben (38,131,132,134) und zwei Zahnriemen (39,133) besteht.

6. Füllmengenmesser nach einem der Ansprüche 1 bis 5, dadurch gekennzeichnet, dass der Rechner (C) mit einem Programm versehen ist, um eine Horizontalebene in vorbestimmten Differenzschritten abzutasten.

7. Füllmengenmesser nach einem der Ansprüche 1 bis 5, dadurch gekennzeichnet, dass der Rechner (C) mit einem Programm versehen ist, um den Raum in vorbestimmten Differenzwinkeln abzutasten.

8. Füllmengenmesser nach einem der Ansprüche 1 bis 7, dadurch gekennzeichnet, dass der Halter (3) eine Dosenlibelle (137) aufweist, um die erste Achse (6) nach der Vertikale (V) zu eichen.

9. Anwendung eines Füllmengenmessers nach einem der Ansprüche 1 bis 8 zur Messung des Gutvolumens eines Silos aus der Differenz zwischen Volumen des leeren Silos bis zu einer vorbestimmten Silohöhe und des Füllmengen-Restvolumens des Silos bis zu dieser Silohöhe.

10. Anwendung nach Anspruch 9, dadurch gekennzeichnet, dass der Füllmengenmesser derart mit einer an den Rand oder an die Decke des Silos fest installierten Plattform verbindbar ist, dass die Messkoordinaten immer denselben Ursprung haben.

Fig. 1

EP 0 310 564 A1

Fig. 2

# Fig. 3

| | | | |
|---|---|---|---|

**Europäisches Patentamt**

# EUROPÄISCHER RECHERCHENBERICHT

Nummer der Anmeldung

EP 88 81 0671

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 339 664 (WIKLUND et al.) * Figures 1,2; Zusammenfassung; Spalte 2, Zeilen 55-58; Spalte 3, Zeilen 11-25 * | 1,6,7 | G 01 F 23/28 G 10 K 11/00 |
| Y | | 2-5 | |
| Y | EP-A-0 028 325 (SIEMENS) * Figur 1; Seite 6, Zeile 26 - Seite 7, Zeile 7; Ansprüche 1,8,9 * | 2-5 | |
| A | DE-A-3 533 073 (RUMP) * Seite 3, Zeile 1 - Seite 6, Zeile 9; Figuren 2,3 * | 1 | |
| A | LU-A- 70 310 (WURTH) * Figur 1; Anspruch 1 * | 1 | |

**RECHERCHIERTE SACHGEBIETE (Int. Cl.4)**

G 01 F
G 10 K
G 01 S
G 01 B
G 01 C

Der vorliegende Recherchenbericht wurde für alle Patentansprüche erstellt

| Recherchenort | Abschlußdatum der Recherche | Prüfer |
|---|---|---|
| DEN HAAG | 02-12-1988 | KOLBE W.H. |

EPO FORM 1503 03.82 (P0403)